# EUROPEAN PATENT SPECIFICATION

(11) **EP 2 418 882 B1**
(45) Date of publication and mention of the grant of the patent: **26.12.2018**
(21) Application number: 10172463.1
(22) Date of filing: 11.08.2010
(51) Int. Cl.: H04W 8/22

(54) **Method of setting a user identification device within a communication module into an out-of-service-state**
Verfahren zur Einstellung einer Benutzeridentifikationsvorrichtung in einem Kommunikationsmodul in einen Außerbetriebszustand
Procédé de réglage d'un dispositif d'identification utilisateur dans un module de communication dans un état hors-service

(43) Date of publication of application: 15.02.2012
(73) Proprietor: Vodafone GmbH, 40549 Düsseldorf (DE)
(72) Inventor: Dietz, Ulrich, 81669, Munich (DE); Birle, Christian, 80799, München (DE)
(74) Representative: Müller & Schubert

(56) References cited:
- EP-A2- 1 337 120
- US-A- 5 870 459
- US-A- 5 898 783
- "3rd Generation Partnership Project; Technical Specification Group Services and System Aspects; Transferring of emergency call data (Release 9)", 3GPP STANDARD; 3GPP TR 22.967, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 31 December 2009 (2009-12-31), pages 1-24, XP050401782, [retrieved on 2009-12-31]

## Description

The present invention relates to a method of setting a User identification device within a communication module within a vehicle into an Out-of-Service-State at the end of lifecycle of said vehicle according to the preamble of independent claim 1. Furthermore, the present invention relates to a system comprising a communication module.

In future a huge number of vehicles are going to be equipped with mobile communication modules, in order to providing so called eCall solutions for example. eCall is a pan European project which intends to bring rapid assistance to motorists involved in a collision anywhere in the European Union. The project intends a hardware black box installed in vehicles. This black box comprises a communication module which is adapted to wirelessly send vehicle sensor information, such as airbag deployment and impact sensor information and the like, as well as GPS coordinates of the vehicle to local emergency agencies (Public Safety Answering Points - PSAPs).

For the operators of communications networks it is a problem to recognize if the vehicle and hence the communication module implemented therein reaches its end of lifecycle. Thus, the operators do not know, whether a User identification device, for example a SIM device is still in use or whether a User identification device could be set into an Out-of-Service-State. This has to do with the requirement that the device being non-trackable and able to be switched off totally. In particular, if the communications network is designed as a mobile radio network, the operator cannot be sure whether or not he could remove a SIM device from the home location register (HLR). The home location register is a central database that contains details of each mobile phone subscriber that is authorized to use the mobile radio network. This leads to high administration and operational costs on the operator's side.

At present, two different solutions do exist in the general prior art, how SIM devices can be checked out at the end of their lifecycle. For example, it is known to manually check out a SIM device. However, this is very uncomfortable and cost intensive. According to a different solution it is indirectly concluded that a SIM device has reached its end of lifecycle, if the SIM device has not been activated for a predetermined time period. However, the temporary deactivation of a vehicle does not automatically mean that the vehicle has actually reached its end of lifecycle.

US 5,870,459 discloses a recyclable mobile phone. This mobile phone can be deactivated. For this purpose, the mobile phone is pre-programmed such that a defined period of use is pre-set. When the pre-set period of use expires, the mobile phone is automatically rendered inoperable. However, this state can get reversed such that the mobile phone can be used again.

EP 1 337 120 A2 discloses that a user identification device can be arranged in a vehicle and can be deactivated.

It is the object of the present invention to provide a solution which allows to overcoming those drawbacks as mentioned before. In particular it is the object of the present invention to provide a solution which easily allows to setting a User identification device within a communication module within a vehicle into an Out-of-Service-State at the end of lifecycle of said vehicle without creating any high administration and operational cost.

In accordance with the present invention, this object is solved by the method with the features according to independent claim 1, as well as by the system with the features according to independent claim 7.

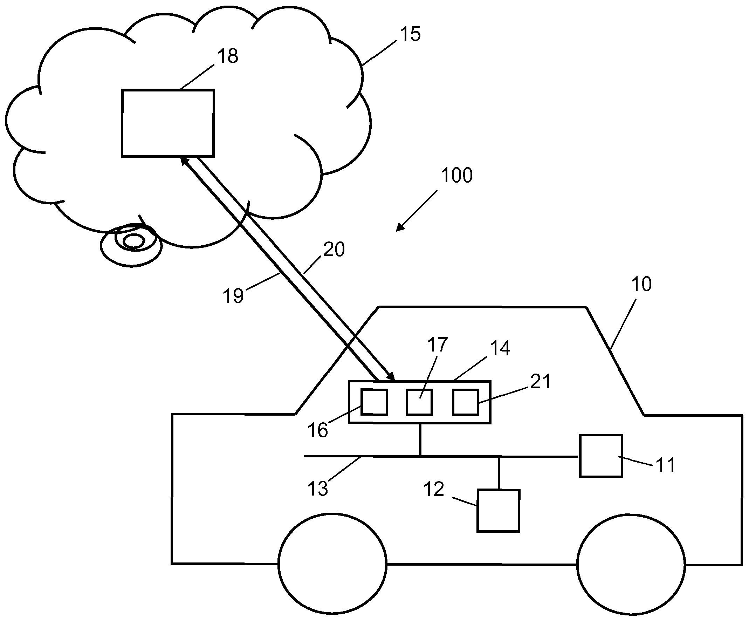

Additional features and details of the present invention become apparent from the dependent claims, from the description and from the drawing. Features and details described in connection with the method according to the first aspect of the invention are, of course, also valid in connection with the system according to the second aspect of the invention, and vice versa.

The present invention is based on the general finding that a signal characterising the end of lifecycle of a vehicle incorporating such a communication module, which however is not primarily used in connection with the User identification device, is additionally utilised to setting the User identification device into an Out-of-Service-State as well.

According to a first aspect of the present invention the object is solved by a method of setting a User identification device within a communication module within a vehicle into an Out-of-Service-State at the end of lifecycle of a vehicle incorporating such a communication module, said method comprising the features of independent claim 1.

The present invention is directed to handling a User identification device. For example, the User identification devices can be a SIM device. A SIM (Subscriber Identity Module) usually contains its unique serial number, an internationally unique number of the mobile user (IMSI), security authentication and ciphering information, temporary information related to the local network, a list of the services the user has access to and passwords, for example PIN for usual use and PUK for unlocking. For example, the SIM device can be a SIM card that is detachably or non-detachably incorporated within a communication module, for example a mobile phone, a computer or the like. According to another embodiment the User identification devices can be an electronic and/or logic module within a communication module. According to the present invention the User identification device preferably is a SIM card embedded within said communication module, or an integrated or replaceable component within said communication module. According to a different embodiment the User identification device can be a Trusted Platform Module or a similar device.

The User identification device is arranged within a communication module. In general, a communication module is a module which allows to establish a communication link and which allows to perform a communication. The communication module is operated within a communications network. Therefore, the communication module is allocated to a communications network. For example, the communications network is a telecommunications network. Preferably the communications network is a mobile radio network. In such a case the communication module is a mobile communication module, for example a mobile phone module, a mobile computer or the like.

According to the present invention the method is directed to setting a User identification device within a communication module into an Out-of-Service-State at the end of lifecycle of a vehicle incorporating such a communication module.

According to the present invention "Out-of-Service-State" particularly means that the User identification device is finally and irreversibly deactivated. "End of lifecycle" generally means that a device has reached its final life cycle or service life. In particular a device is destroyed at its end of lifecycle.

The method according to the first aspect of the present invention is characterized by the following steps:
Within a control device, which is at least temporarily in connection with said communication module, a signal characterizing the end of lifecycle is generated. According to the present invention, a vehicle comprises a control unit which controls several components within said vehicle. Preferred embodiments of the present invention which are directed to vehicles are described further below.

According to a second step, the signal characterizing the end of lifecycle is transmitted from said control device to said communication module. Preferably the signal characterizing the end of lifecycle is interpreted within said communication module.

Based on the received signal, for example based on the interpretation of said signal, a message is - particularly automatically - sent via said communications network from the communication module to a central processing device, which is allocated to said communications network, said message containing information that the User identification device shall be taken Out-of-Service. According to one embodiment the message can be - particularly automatically - generated within said communication module once the signal has been received. According to a different embodiment a predefined message is stored within said communication module, preferably within said User identification device. Once the signal characterizing the end of lifecycle has been received by said communication module, the predefined message is sent to the central processing device. According to yet another embodiment the received signal itself can be used as a message.

Preferably, the central processing device is allocated to the communications network. The central processing device can comprise one or more computers, servers or the like. Preferably, the central processing device is operated by the operator of the communications network. For example, the central processing device can be arranged as a central Service Centre, a M2M platform or the like.

Finally, based on the received message, the User identification device is set into an Out-of-Service-State within said central processing device. In case of a mobile radio network, the User identification device can be deactivated within a central HLR (Home Location Register).

The method according to the first aspect of the present invention generally describes the entire method of setting a User identification device within a communication module into an Out-of-Service-State. Two major components are involved within said method. A first component comprises the communication module. A second component comprises the central processing device.

The method according to the first aspect of the present invention preferably allows an embedded automotive User identification device deactivation at the end of lifecycle.

According to a preferred embodiment, once the User identification device has been set into an Out-of-Service-State within said central processing device, a confirmation information that the User identification device has been set into an Out-of-Service-State is generated by said central processing device and sent from said central processing device to said communication module, or the confirmation information that the User identification device has been set into an Out-of-Service-State is received by said communication module.

Such confirmation information can be stored within a storage unit. The storage unit can be incorporated within said communication module. Preferably, said storage unit can be allocated to the User identification device, for example incorporated therein.

According to the present invention the method is adapted of setting a User identification device within a communication module within a vehicle into an Out-of-Service-State at the end of lifecycle of said vehicle. It is preferred in such a case that a signal characterizing the end of lifecycle of said vehicle is generated within a control device, which is allocated to said vehicle and which is at least temporarily in connection with said communication module, and that the signal is transferred to said communication module. According to a different embodiment a signal characterizing the end of lifecycle can be generated outside of said vehicle, and that the signal is transferred to said communication module. In the latter case, a signal can be considered, which is delivered from the outside, for example as a direct push service (WAP push, SMS, and the like) or as a paging signal delivered via cellular communication.

Now, this embodiment relating to a vehicle is described in greater detail. A vehicle usually comprises a control device which controls a number of components within said vehicle. For this reason, those components and the control device are linked via a BUS-system. In particular, a BUS-system is a system that connects multiple devices. An electric bus is an electrical connection between multiple electronic devices. A BUS-system in computer architecture is a system that that transfers data between computer components inside a computer or between computers. According to the present invention the BUS-system preferably can be an electric and/or computer BUS-system. According to a preferred embodiment the BUS-system can be arranged as a CAN-BUS (Controller Area Network). CAN is a vehicle bus standard designed to allow microcontrollers and devices to communicate with each other within a vehicle without a host computer.

Once a vehicle has reached its end of lifecycle and is to be scrapped, all pyrotechnical loads, for example airbags, have to be activated and ignited. Via the control device an impulse is sent to all loads which are activated and ignited upon said impulse.

According to the present invention, the control device generates a signal characterizing the end of lifecycle. This signal is sent via said BUS-system. The control device generates a signal which characterises the end of lifecycle of the vehicle. For example, such a signal can be an impulse for activating and igniting pyrotechnical loads within said vehicle.

According to the present invention the vehicle comprises a communication module. Said communication module is linked to the BUS-system as well. Therefore, the signal characterizing the end of lifecycle, which is generated by said control device, is transferred via said BUS-system to at least one vehicle component being linked to the BUS-system. In addition, such a signal can be read off by said communication module as well.

In progress of the pyrotechnical final disposal ignition of the above mentioned pyrotechnical loads, the control device sends a signal to the communication module via the BUS-system which indicates this action. Once the communication module receives this signal, a message is sent via said communications network from the communication module to a central processing device, which is allocated to said communications network, said message containing information that the User identification device shall be taken Out-of-Service. For example, the message can be generated within the communication module or the communication module can use a predefined message which is stored within said communication module. According to a different embodiment it is possible that the communication module uses the received signal as a message. In such a case the communication module sends the received signal to the central processing unit.

Based on the received massage, the User identification device is set into an Out-of-Service-State within said central processing device.

Advantageously, the method is adapted of setting a User identification device within an eCall communication module into an Out-of-Service-State at the end of lifecycle. eCall is a pan European project which intends to bring rapid assistance to motorists involved in a collision anywhere in the European Union. The project intends a hardware black box installed in vehicles. This black box comprises a communication module which is adapted to wirelessly send vehicle sensor information, such as airbag deployment and impact sensor information and the like, as well as GPS coordinates of the vehicle to local emergency agencies. Such communication modules perform wireless communication through a communications network such as a telecommunications network, a mobile radio network for example. Therefore, the communication module usually comprises a User identification device, a SIM device for example. Usually, in connection with eCall solutions the User identification device is not actively used during its lifecycle unless an accident happens. For that reason it is intended that such User identification devices log in themselves into the communications network only, if the case of an emergency happens.

In case of an accident, if the vehicle was part of a severe crash, and the airbags have been deployed, an eCall is being sent. Usually, the vehicle is blocked until the airbags have been recharged and the electronics has been updated. This eCall situation can be used as well to generate a signal characterizing the end of lifecycle, since, due to experience, a severe damaged car might not get retrofitted to get the remaining airbags deployed too.

Preferably, the communication module is connected to an electric power source. The electric power source supplies at least temporarily electric power to the communication module. According to one preferred embodiment, once the signal characterizing the end of lifecycle is generated or transmitted by said control unit, the electric power source is activated for supplying electric power to said communication module. The electric power source shall be large enough to allow the communication module to sending the message to the central processing device and to optionally receiving and storing confirmation information from said central processing device. Such an additional electric power source is advantageous if the device incorporation the communication module, a vehicle for example, has been deactivated a certain time before the end of lifecycle is reached. For example, the electric power source can be arranged as a capacitor device, preferably as a goldcap device. In case that the communication module is arranged within a vehicle the electric power source can be charged once the signal characterizing the end of lifecycle is generated by said control device.

According to the second aspect of the present invention, the object is solved by a system, which comprises the features of independent claim 7.

In particular, the system is allocated to a communications network. Preferably the system is part of said communications network. In such a case it is preferred that the central processing device and the communication module being allocated to said communications network as well.

Preferably the system comprises means for performing the above described method according to the first aspect of the present invention. Therefore, full reference is made to the disclosure relating to the method according to the present invention.

For a better understanding of the present invention an embodiment realizing the features of the present invention will now be described by way of example with reference to the accompanying drawing which schematically shows the components and the procedure of the present invention.

The figure depicts a vehicle 10 which comprises a control device 11. The control device 11 is coupled to several vehicle components 12 via a BUS-system 13, a CAN-BUS for example. Furthermore, the vehicle 10 comprises a communication module 14 for performing mobile radio communication. The communication module 14 is linked to the BUS-system 13 as well. The communication module 14 which is allocated to a communications network 15, a mobile radio network for example comprises a User identification device 16, a SIM device in the present embodiment. The SIM device 16 comprises a storage unit 17.

In future a huge number of vehicles 10 are going to be equipped with mobile communication modules 14, in order to provide so called eCall solutions. Such eCall communication modules perform wireless communication through the communications network 15. Usually, in connection with eCall solutions the SIM device 16 is not actively used during its lifecycle unless an accident happens. For that reason it is intended that such SIM devices log in themselves into the communications network only, if the case of an emergency happens. For the operator of communications network 15 it is a problem to recognize if the vehicle 10 and hence the communication module 14 implemented therein reaches its end of lifecycle. Thus, the operator does not know, whether the SIM device 16 is still in use or whether the SIM device 16 could be set into an Out-of-Service-State, in order to reduce administration and operational cost.

The present invention provides a solution which easily allows to setting the SIM device 16 within the communication module 14 into an Out-of-Service-State at the end of lifecycle of the vehicle 10 incorporating said communication module 14.

Once the vehicle 10 has reached its end of lifecycle and is to be scrapped all pyrotechnical loads, for example airbags, have to be activated and ignited. Control device 11 generates an impulse which is sent via BUS-system 13 to all loads which are activated and ignited upon said impulse.

According to the present invention, the control device 11 generates a signal characterizing the end of lifecycle of vehicle 10. In particular the control device 11 generates a signal which characterises the end of lifecycle of vehicle 10. For example such a signal can be an impulse for activating and igniting pyrotechnical loads within said vehicle 10.

According to the present invention the vehicle 10 comprises communication module 14 which is linked to BUS-system 13 as well. Therefore, the signal characterizing the end of lifecycle, which is generated by said control device 11, is transferred via said BUS-system 13 to at least one vehicle component 12 being linked to BUS-system 13. In addition the signal is read off by communication module 14 as well.

In progress of the pyrotechnical final disposal ignition of the above mentioned pyrotechnical loads, the control device 11 sends a signal to communication module 14 via BUS-system 13 which indicates this action. Once communication module 14 receives this signal, a message is sent via said communications network 15 from communication module 14 to a central processing device 18, which is allocated to communications network 15. The transfer of this message is represented by arrow 19. The message contains information that the SIM device 16 shall be taken Out-of-Service.

Based on the received massage, the SIM device 16 is set into an Out-of-Service-State within central processing device 18. In the present case of a mobile radio network, the SIM device 16 is deactivated within a central HLR (Home Location Register).

Finally, central processing device 18 generates confirmation information which is transferred to communication module 14. The transfer of this information is represented by arrow 20. The confirmation information is stored within storage unit 17 of SIM device 16.

Preferably, communication module 14 and central processing device 18 are components of a system 100, said system 100 being allocated to communications network 15. Preferably, communications network 15 is part of said system 100 as well. Central processing device 18 comprises an interface to communication module 14 and communication module 14 comprises an interface to central processing device 18. Via said interfaces a communication link can be established between communication module 14 and central processing device 18. Via said communication link, the message transfer 19 and/or the transfer 20 of confirmation information can take place.

Preferably, the communication module 14 comprises an electric power source 21, a capacitor for example. Once the signal characterizing the end of lifecycle is generated or transmitted by control unit 11, the electric power source 21 is activated and charged for supplying electric power to said communication module 14. The electric power source 21 shall be large enough to allow the communication module 14 to sending the message to the central processing device 18 and to optionally receiving and storing confirmation information from said central processing device 18.

### List of Reference Numerals

- 10: Vehicle
- 11: Control Device
- 12: Vehicle component
- 13: BUS-system
- 14: Communication module
- 15: Communications network
- 16: User identification device (SIM device)
- 17: Storage unit
- 18: Central processing device
- 19: Message transfer
- 20: Transfer of confirmation information
- 21: Electric power source
- 100: System

## Claims

1. A method of setting a User identification device (16) within a communication module (14) within a vehicle (10) into an Out-of-Service-State, wherein the User identification device is finally and irreversibly deactivated, at the end of lifecycle, wherein the User identification device has reached its final life cycle or service life, of said vehicle (10) incorporating such a communication module (14), said communication module (14) being allocated to a communications network (15), said method being **characterized by** the following steps:
a) within a control device (11) of said vehicle, which is coupled to several vehicle components via a BUS-system (13) and which controls these components within said vehicle (10), said control device (11) being at least temporarily in connection with said communication module (14), which is linked to the BUS-system (13) as well, a signal characterizing the end of lifecycle of said vehicle (10) is generated; once the vehicle has reached its end of life cycle,
b) the signal characterizing the end of lifecycle of the vehicle (10) is transmitted from said control device (11) via said BUS-system (13) to at least one vehicle component and in addition the signal is read out by the communication module (14) as well;
c) once the signal characterizing the end of life cycle has been received by the communication module (14), a message is sent (19) via said communications network (15) from the communication module (14) to a central processing device (18), which is allocated to said communications network (15), said message containing information that the User identification device (16) shall be taken Out-of-Service,
d) within said central processing device (18), based on the received message the User identification device (16) is set into an Out-of-Service-State.

2. The method according to claim 1, **characterized in that**, once the User identification device (16) has been set into an Out-of-Service-State within said central processing device (18), a confirmation information that the User identification device (16) has been set into an Out-of-Service-State is generated by said central processing device (18) and sent (20) from said central processing device (18) to said communication module (14), or that a confirmation information that the User identification device (16) has been set into an Out-of-Service-State is received by said communication module (14).

3. The method according to claim 2, **characterized in that** the confirmation information are stored within a storage unit (17), said storage unit preferably being allocated to said User identification device (16).

4. The method according to anyone of claims 1 to 3, **characterized in that** the method is adapted of setting a User identification device (16) within an eCall communication module into an Out-of-Service-State at the end of lifecycle.

5. The method according to anyone of claims 1 to 4, **characterized in that** the communication module (14) is connected to an electric power source (21) and that the electric power source (21) supplies at least temporarily electric power to said communication module (14).

6. The method according to anyone of claims 1 to 5, **characterized in that** the User identification device (16) is a SIM card embedded within said communication module (14), or that the User identification device (16) is an integrated or replaceable component within said communication module (14), or that the User identification device (16) is a Trusted Platform Module.

7. A system (100) comprising means for performing the method according to anyone of claims 1 to 6, said system being allocated to a communications network, said system comprising a central processing device (18), and a communication module (14) within a vehicle (10),, said central processing device (18) comprising an interface to said communication module (14) and said communication module (14) comprising an interface to said central processing device (18).

## Patentansprüche

1. Verfahren zum Versetzen einer Nutzeridentifikationsvorrichtung (16) innerhalb eines Kommunikationsmoduls (14) innerhalb eines Fahrzeugs (10) in einen Außer-Betrieb-Zustand, in dem die Nutzeridentifikationsvorrichtung abschließend und irreversibel deaktiviert ist, am Ende des Lebenszyklus des Fahrzeugs (10), welches solch ein Kommunikationsmodul aufweist, wobei die Nutzeridentifikationsvorrichtung (16) ihren finalen Lebenszyklus oder Serviceleben erreicht hat, wobei das Kommunikationsmodul (14) einem Kommunikationsnetzwerk (15) zugeordnet ist, wobei das Verfahren durch die folgenden Schritte gekennzeichnet ist:
a) innerhalb einer Steuereinrichtung (11) des Fahrzeugs, die über ein BUS-System (13) mit mehreren Fahrzeugkomponenten verbunden ist und die diese Komponenten innerhalb des Fahrzeugs kontrolliert, wobei sich die Steuereinrichtung (11) zumindest zeitweilig mit dem Kommunikationsmodul (14) in Verbindung befindet, welches ebenfalls mit dem BUS-System (13) verbunden ist, wird ein das Ende des Lebenszyklus des Fahrzeugs (10) charakterisierendes Signal erzeugt, sobald das Fahrzeug sein Ende des Lebenszyklus erreicht hat;
b) das das Ende des Lebenszyklus des Fahrzeugs (10) charakterisierende Signal wird von der Steuereinrichtung (11) über das BUS-System (13) zu mindestens einer Fahrzeugkomponente übertragen, und zusätzlich wird das Signal auch durch das Kommunikationsmodul (14) ausgelesen:
c) sobald das das Ende des Lebenszyklus charakterisierende Signal von dem Kommunikationsmodul (14) empfangen wurde, wird eine Nachricht (19) über das Kommunikationsnetzwerk (15) von dem Kommunikationsmodul (14) an eine zentrale Verarbeitungsvorrichtung (18) gesendet, die dem Kommunikationsnetzwerk (15) zugeordnet ist, wobei die Nachricht Informationen beinhaltet, dass die Nutzeridentifikationsvorrichtung (16) außer Betrieb genommen werden soll;
d) in der zentralen Verarbeitungsvorrichtung (18) wird, basierend auf der empfangenen Nachricht, die Nutzeridentifikationsvorrichtung (16) in einen Außer-Betrieb-Zustand versetzt.

2. Verfahren nach Anspruch 1, **dadurch gekennzeichnet, dass**, sobald die Nutzeridentifikationsvorrichtung (16) in einen Außer-Betrieb-Zustand innerhalb der zentralen Verarbeitungsvorrichtung (18) versetzt worden ist, eine Bestätigungsinformation, dass der Nutzeridentifikationsvorrichtung (16) in einen Außer-Betrieb-Zustand versetzt wurde, von der zentralen Verarbeitungsvorrichtung (18) erzeugt und von der zentralen Verarbeitungsvorrichtung (18) an das Kommunikationsmodul (14) gesendet wird, oder dass eine Bestätigungsinformation, dass die Nutzeridentifikationsvorrichtung (16) in einen Außer-Betrieb-Zustand versetzt worden ist, von dem Kommunikationsmodul (14) empfangen wird.

3. Verfahren nach Anspruch 2, **dadurch gekennzeichnet, dass** die Bestätigungsinformationen in einer Speichereinheit (17) gespeichert sind, wobei die Speichereinheit vorzugsweise der Nutzeridentifikationsvorrichtung (16) zugeordnet ist.

4. Verfahren nach einem der Ansprüche 1 bis 3, **dadurch gekennzeichnet, dass** das Verfahren ausgebildet ist, eine Nutzeridentifikationsvorrichtung (16) in einem eCall-Kommunikationsmodul am Ende des Lebenszyklus in einen Außer-Betrieb-Zustand zu versetzen.

5. Verfahren nach einem der Ansprüche 1 bis 4, **dadurch gekennzeichnet, dass** das Kommunikationsmodul (14) mit einer elektrischen Energiequelle (21) verbunden ist und dass die elektrische Energiequelle (21) dem Kommunikationsmodul (14) zumindest zeitweise elektrische Energie zuführt.

6. Verfahren nach einem der Ansprüche 1 bis 5, **dadurch gekennzeichnet, dass** die Nutzeridentifikationsvorrichtung (16) eine in das Kommunikationsmodul (14) eingebettete SIM-Karte ist, oder dass die Nutzeridentifikationsvorrichtung (16) eine integrierte oder ersetzbare Komponente in dem Kommunikationsmodul (14) ist, oder dass die Nutzeridentifikationsvorrichtung (16) ein Trusted Plattform Modul ist.

7. System (100), aufweisend Mittel zur Durchführung des Verfahrens nach einem der Ansprüche 1 bis 6, wobei das System einem Kommunikationsnetzwerk zugeordnet ist, wobei das System eine zentrale Verarbeitungsvorrichtung (18) und ein Kommunikationsmodul (14) in einem Fahrzeug (10) aufweist, wobei die zentrale Verarbeitungsvorrichtung (18) eine Schnittstelle zu dem Kommunikationsmodul (14) und das Kommunikationsmodul (14) eine Schnittstelle zu der zentralen Verarbeitungseinrichtung (18) aufweist.

## Revendications

1. Procédé de réglage d'un dispositif d'identification utilisateur (16) dans un module de communication (14) dans un véhicule (10) dans un état hors-service, dans lequel le dispositif d'identification utilisateur est finalement désactivé de manière irréversible, à la fin du cycle de vie, dans lequel le dispositif d'identification utilisateur a atteint la fin de son cycle de vie ou de sa durée de vie en service, dudit véhicule (10) incorporant un tel module de communication (14), ledit module de communication (14) étant affecté à un réseau de communications (15), ledit procédé étant **caractérisé par** les étapes suivantes :
a) dans un dispositif de commande (11) dudit véhicule, qui est couplé à plusieurs composants de véhicule via un système BUS (13) et qui commande ces composants dans ledit véhicule (10), ledit dispositif de commande (11) étant au moins provisoirement en connexion avec ledit module de communication (14), qui est également lié au système BUS (13), un signal caractérisant la fin du cycle de vie dudit véhicule (10) est généré, une fois que le véhicule a atteint la fin de son cycle de vie,
b) le signal caractérisant la fin du cycle de vie du véhicule (10) est transmis par ledit dispositif de commande (11) via ledit système BUS (13) à au moins un composant de véhicule et par ailleurs, le signal est également lu par le module de communication (14) ;
c) une fois que le signal caractérisant la fin du cycle de vie a été reçu par le module de communication (14), un message est envoyé (19) via ledit réseau de communications (15) du module de communication (14) à un dispositif de traitement central (18), qui est affecté audit réseau de communications (15), ledit message contenant des informations indiquant que le dispositif d'identification utilisateur (16) doit être mis hors-service,
d) dans ledit dispositif de traitement central (18), sur la base du message reçu, le dispositif d'identification utilisateur (16) est réglé dans un état hors-service.

2. Procédé selon la revendication 1, **caractérisé en ce que**, une fois que le dispositif d'identification utilisateur (16) a été réglé dans un état hors-service dans ledit dispositif de traitement central (18), des informations de confirmation indiquant que le dispositif d'identification utilisateur (16) a été réglé dans un état hors-service sont générées par ledit dispositif de traitement central (18) et envoyées (20) dudit dispositif de traitement central (18) audit module de communication (14), ou **en ce que** des informations de confirmation indiquant que le dispositif d'identification utilisateur (16) a été réglé dans un état hors-service sont reçues par ledit module de communication (14).

3. Procédé selon la revendication 2, **caractérisé en ce que** les informations de confirmation sont stockées dans une unité de stockage (17), ladite unité de stockage étant de préférence affectée audit dispositif d'identification utilisateur (16).

4. Procédé selon l'une quelconque des revendications 1 à 3, **caractérisé en ce que** le procédé est adapté pour régler un dispositif d'identification utilisateur (16) dans un module de communication eCall dans un état hors-service à la fin du cycle de vie.

5. Procédé selon l'une quelconque des revendications 1 à 4, **caractérisé en ce que** le module de communication (14) est connecté à une source d'alimentation électrique (21) et **en ce que** la source d'alimentation électrique (21) alimente au moins provisoirement en énergie électrique ledit module de communication (14).

6. Procédé selon l'une quelconque des revendications 1 à 5, **caractérisé en ce que** le dispositif d'identification utilisateur (16) est une carte SIM incorporée dans ledit module de communication (14), ou **en ce que** le dispositif d'identification utilisateur (16) est un composant intégré ou remplaçable dans ledit module de communication (14), ou **en ce que** le dispositif d'identification utilisateur (16) est un module de plate-forme sécurisée.

7. Système (100) comprenant des moyens pour effectuer le procédé selon l'une quelconque des revendications 1 à 6, ledit système étant affecté à un réseau de communications, ledit système comprenant un dispositif de traitement central (18), et un module de communication (14) dans un véhicule (10), ledit dispositif de traitement central (18) comprenant une interface avec ledit module de communication (14) et ledit module de communication (14) comprenant une interface avec ledit dispositif de traitement central (18) .
